(19)

Europäisches Patentamt
European Patent Office
Office européen des brevets

(11) **EP 4 765 114 A1**

(12) **EUROPEAN PATENT APPLICATION**
published in accordance with Art. 153(4) EPC

(43) Date of publication:
**24.06.2026 Bulletin 2026/26**

(21) Application number: **24863307.5**

(22) Date of filing: **14.08.2024**

(51) International Patent Classification (IPC):
*G10L 21/0272* (2013.01)     *G10L 25/30* (2013.01)
*G06N 3/04* (2023.01)        *G06N 20/00* (2019.01)
*G10L 21/028* (2013.01)

(52) Cooperative Patent Classification (CPC):
**G10L 21/0272; G06N 3/04; G06N 20/00;
G10L 21/028**

(86) International application number:
**PCT/KR2024/096005**

(87) International publication number:
**WO 2025/053728 (13.03.2025 Gazette 2025/11)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **05.09.2023  KR 20230117939
31.01.2024  KR 20240015181**

(71) Applicant: **Samsung Electronics Co., Ltd.
Suwon-si, Gyeonggi-do 16677 (KR)**

(72) Inventors:
• **EOM, Deokjun
Suwon-si, Gyeonggi-do 16677 (KR)**
• **KIM, Kyungrae
Suwon-si, Gyeonggi-do 16677 (KR)**
• **NAM, Woohyun
Suwon-si, Gyeonggi-do 16677 (KR)**
• **KIM, Nahyun
Suwon-si, Gyeonggi-do 16677 (KR)**
• **PARK, Jungwon
Suwon-si, Gyeonggi-do 16677 (KR)**

(74) Representative: **Appleyard Lees IP LLP
G Mill
Dean Clough Industrial Park
Halifax HX3 5AH (GB)**

(54) **AUDIO SEPARATION METHOD AND ELECTRONIC DEVICE FOR PERFORMING SAME**

(57)     Provided are a method of separating a second audio from a first audio by using one or more artificial neural networks, and an electronic device for performing the method. The method includes extracting a plurality of pieces of first feature data from target information related to the second audio, generating second feature data by applying a plurality of feature separation vectors corresponding to types of the target information, to the plurality of pieces of first feature data, and separating the second audio from the first audio based on the second feature data.

FIG. 1

**Description**

[Technical Field]

The disclosure relates to an audio processing method, and in particular, a method of separating a target audio from mixed audio including a plurality of audios, and an electronic device for performing the method.

[Background Art]

Audio separation technology is for separating a target audio from mixed audio including a plurality of audios. In a related art, an audio separation method includes extracting audio features from mixed audio by using a convolutional neural network, generating a spectrogram corresponding to a target audio from the audio features by using an up-convolutional neural network, and then finally obtaining the target audio. In this related art method, target information corresponding to the target audio is required. For example, visual information (e.g., an image including all or part of the face of a speaker corresponding to the target audio), audio information (e.g., a pre-recorded voice of the speaker corresponding to the target audio), text information (e.g., a speech text corresponding to the target audio), or the gender, age, or the like of a target speaker may be used as the target information.

Related art audio separation techniques use separate audio separation models depending on the type of target information. For example, an audio separation model that uses a mouth shape of a target speaker as target information cannot utilize a pre-recorded voice of the target speaker as target information. Therefore, in order to separate a target audio by using a plurality of types of target information, a plurality of audio separation models capable of processing the respective types of target information are required, and in this case, the memory usage increases in proportion to the number of types of target information.

In addition, the audio separation model that separates target audio by using one type of target information causes drastic deterioration in audio separation performance when the target information is no longer available. For example, the performance of an audio separation model that separates target audio by using a mouth shape of a target speaker sharply decreases for a section where a mouth shape of the target speaker is obscured.

[Disclosure of Invention]

[Solution to Problem]

According to an aspect of the disclosure, there is provided a method of processing a first audio using one or more artificial neural networks, the method including: extracting a plurality of pieces of first feature data from target information related to a second audio, generating second feature data based on the plurality of pieces of first feature data and a plurality of feature separation vectors corresponding to a plurality of types of the target information and separating the second audio from the first audio based on the second feature data.

According to another aspect of the disclosure, there is provided an electronic device for processing a first audio using one or more artificial neural networks including: one or more processors; and a memory storing one or more instructions that, when executed by the one or more processors individually or collectively, cause the electronic device using one or more artificial neural networks to perform operations including: extracting a plurality of pieces of first feature data from target information related to a second audio, generating second feature data based on the plurality of pieces of first feature data and a plurality of feature separation vectors corresponding to a plurality of types of the target information, and separating the second audio from the first audio based on the second feature data.

According to another aspect of the disclosure, there is provided a computer-readable recording medium having a stored therein a program that, when executed by a computer, causes the computer to perform a method comprising: extracting a plurality of pieces of first feature data from target information related to a second audio, generating second feature data based on the plurality of pieces of first feature data and a plurality of feature separation vectors corresponding to a plurality of types of the target information, and separating the second audio from the first audio based on the second feature data.

[Brief Description of Drawings]

FIG. 1 illustrates an audio separation network according to an embodiment of the disclosure.
FIG. 2 shows a result of feature projection of a plurality of pieces of first feature data and second feature data, according to an embodiment of the disclosure.
FIG. 3 illustrates an audio separation module according to an embodiment of the disclosure.
FIG. 4 is a flowchart of an audio separation method according to an embodiment of the disclosure.
FIG. 5 is a conceptual diagram illustrating an operation performed by an audio separation network in an example case in which target information is no longer available, according to an embodiment of the disclosure.
FIG. 6 is a flowchart of a method of separating an audio in an example case in which target information is no longer available, according to an embodiment of the disclosure.
FIG. 7 is a conceptual diagram illustrating an audio separation network selecting one of a plurality of pieces of target information, according to an embodiment of the disclosure.

FIG. 8 illustrates an audio separation network configured to separate a target audio by using a plurality of pieces of target information, according to an embodiment of the disclosure.

FIG. 9 is a flowchart of an audio separation method according to an embodiment of the disclosure.

FIG. 10 illustrates an electronic device for executing an audio separation network, according to an embodiment of the disclosure.

[Mode for the Invention]

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects. As used herein, the term "and/or" includes any and all combinations of one or more of the associated listed items. Expressions such as "at least one of," when preceding a list of elements, modify the entire list of elements and do not modify the individual elements of the list.

Hereinafter, a display apparatus and a method of manufacturing the display apparatus will be described in detail with reference to the accompanying drawings. In the following drawings, the same reference numerals refer to the same components, and the size of each component in the drawings may be exaggerated for clarity and convenience of description. The embodiments described below are merely exemplary, and various modifications are possible from these embodiments.

As used herein, the expression "at least one of a, b, or c" may indicate only a, only b, only c, both a and b, both a and c, both b and c, all of a, b, and c, or variations thereof.

Although the terms used herein are selected from among common terms that are currently widely used in consideration of their functions in an embodiment of the disclosure, the terms may be different according to an intention of one of ordinary skill in the art, a precedent, or the advent of new technology. Also, in particular cases, the terms are discretionally selected by the applicant of the disclosure, in which case, the meaning of those terms will be described in detail in the corresponding part of the detailed description. Therefore, the terms used herein should be understood based on the meaning of the terms and content throughout the disclosure rather than merely designations of the terms.

While such terms as "first," "second," etc., may be used to describe various elements, such elements should not be limited by the terms. These terms are used only to distinguish one element from another. For example, a first element may be referred to as a second element, and a second element may be referred to as a first element in a similar manner, without departing from the scope of an embodiment of the disclosure.

It is to be understood that when a certain element is referred to as being "coupled to" or "connected to" another element, the element may be coupled to or connected to the other element directly, but also may have a still another element therebetween. On the other hand, it is to be understood that when a certain element is referred to as being "directly coupled to" or "directly connected to" another element, no other element is present therebetween.

The singular expression may also include the plural meaning as long as it is not inconsistent with the context. All the terms used herein, including technical and scientific terms, may have the same meanings as those generally understood by those of skill in the art.

As used herein, terms such as "comprises," "includes," or "has" specify the presence of stated features, numbers, stages, operations, components, parts, or a combination thereof, but do not preclude the presence or addition of one or more other features, numbers, stages, operations, components, parts, or a combination thereof.

Embodiments herein may be described and illustrated in terms of blocks which carry out a described function or functions. These blocks, which may be referred to herein as managers, units, modules, hardware components or the like, are physically implemented by analog and/or digital circuits such as logic gates, integrated circuits, microprocessors, microcontrollers, memory circuits, passive electronic components, active electronic components, optical components, hardwired circuits and the like, and may optionally be driven by a firmware. The circuits may, for example, be embodied in one or more semiconductor chips, or on substrate supports such as printed circuit boards and the like. The circuits constituting a block may be implemented by dedicated hardware, or by a processor (e.g., one or more programmed microprocessors and associated circuitry), or by a combination of dedicated hardware to perform some functions of the block and a processor to perform other functions of the block. Each block of the embodiments may be physically separated into two or more interacting and discrete blocks without departing from the scope of the disclosure. Likewise, the blocks of the embodiments may be physically combined into more complex blocks without departing from the scope of the disclosure. As used herein, an element expressed as, for example, '...er (or)', '... unit', '... module', or the like, may denote a unit in which two or more elements are combined into one element or one element is divided into two or more elements according to its function. In addition, each element to be described below may additionally perform, in addition to its primary function, some or all of functions of another element, and some of the primary functions of each element may be exclusively performed by another element.

According to one or more embodiments of the disclosure, artificial intelligence-related functions may be performed by a processor and a memory. The processor may include one or more processors. In this case, the one or more processors may be a general-purpose processor, such as a central processing unit (CPU), an application processor (AP), or a digital signal processor (DSP), a dedicated graphics processor such as a graphics processing unit (GPU) or a vision processing unit (VPU), or a dedicated artificial intelligence processor such as a neural processing unit (NPU). The one or more processors perform control to process input data according to predefined operation rules or an artificial intelligence model stored in the memory. Alternatively, in a case where the one or more processors are dedicated artificial intelligence processors, the dedicated artificial intelligence processor may be designed with a hardware structure specialized for processing a particular artificial intelligence model.

The processor may include various processing circuitries and/or multiple processors. For example, the term "processor" as used herein, including in the claims, may include various processing circuitries including at least one processor. One or more of the at least one processor may be configured to perform various functions described herein, individually and/or collectively in a distributed manner. As used herein, when a "processor," "at least one processor," and/or "one or more processors" are described as being configured to perform multiple functions, these terms, without limitation, cover situations where one processor performs some of the functions and another processor(s) performs the other functions, as well as scenarios where a single processor is capable of performing all of the functions. In addition, the at least one processor may include a combination of processors configured to perform various functions described herein, for example, in a distributed manner. The at least one processor may execute program instructions to achieve or perform various functions.

The predefined operation rules or artificial intelligence model is generated via a training process. Here, being generated via a training process may mean that the predefined operation rules or artificial intelligence model set to perform desired characteristics (or purposes), is generated by training a basic artificial intelligence model by using a learning algorithm that utilizes a large amount of training data. The training process may be performed by a device itself on which artificial intelligence according to the disclosure is performed, or by a separate server and/or system. Examples of learning algorithms may include, for example, supervised learning, unsupervised learning, semi-supervised learning, and reinforcement learning, but are not limited thereto.

The artificial intelligence model may include a plurality of neural network layers. Each of the neural network layers has a plurality of weight values, and performs a neural network arithmetic operation via an arithmetic operation between an arithmetic operation result of a previous layer and the plurality of weight values. The plurality of weight values in each of the plurality of neural network layers may be optimized as a result of training the artificial intelligence model. For example, the plurality of weight values may be updated to reduce or minimize a loss or cost value obtained by the artificial intelligence model during a training process. The artificial neural network may include, for example, a deep neural network (DNN) and may include, for example, a convolutional neural network (CNN), a deep neural network (DNN), a recurrent neural network (RNN), a restricted Boltzmann machine (RBM), a deep belief network (DBN), a bidirectional recurrent deep neural network (BRDNN), a deep Q-network (DQN), or the like, but is not limited thereto.

According to one or more embodiments of the disclosure, a machine-readable storage medium may be provided in the form of a non-transitory storage medium. Here, the term 'non-transitory storage medium' refers to a tangible device and does not include a signal (e.g., an electromagnetic wave), and the term 'non-transitory storage medium' does not distinguish between a case where data is stored in a storage medium semi-permanently and a case where data is stored temporarily. For example, the 'non-transitory storage medium' may include a buffer in which data is temporarily stored.

According to an embodiment of the disclosure, methods according to various embodiments disclosed herein may be included in a computer program product and then provided. The computer program product may be traded as commodities between sellers and buyers. The computer program product may be distributed in the form of a machine-readable storage medium (e.g., a compact disc read-only memory (CD-ROM)), or may be distributed online (e.g., downloaded or uploaded) through an application store or directly between two user devices (e.g., smart phones). In a case of online distribution, at least a portion of the computer program product (e.g., a downloadable app) may be temporarily stored in a machine-readable storage medium such as a manufacturer's server, an application store's server, or a memory of a relay server.

Hereinafter, an embodiment of the disclosure will be described in detail with reference to the accompanying drawings to allow those of skill in the art to easily carry out the embodiment of the disclosure. The disclosure may, however, be embodied in many different forms and should not be construed as being limited to an embodiment set forth herein.

In the disclosure, target information 10 may include information related to a speaker corresponding to an audio to be separated (e.g., a second audio 50). For example, target information 10 may be information related to a target speaker. For example, the target information 10 may be a mouth shape of the speaker in an image, a pre-recorded voice of the speaker, a text corresponding to the audio to be separated, or the gender, age, or the like of the speaker. Terms such as 'target speaker information' may be used instead of 'target information'. However, the disclosure is not limited thereto, and as such, target information may include other types of audio information.

In the disclosure, the target speaker may include a speaker corresponding to an audio (or a target audio) (e.g., the second audio 50) to be separated from an audio in which a plurality of audios are mixed (e.g., a first audio 20). Terms such as 'target object' may be used instead of 'target speaker'. However, the disclosure is not limited thereto.

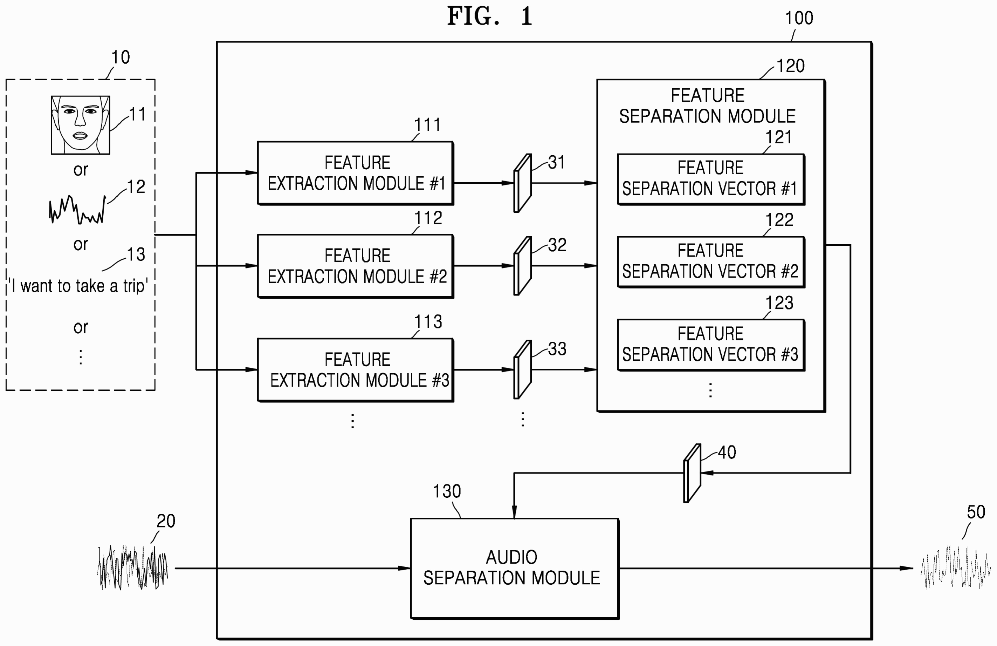

FIG. 1 illustrates an audio separation network 100 according to an embodiment of the disclosure.

Referring to FIG. 1, the audio separation network 100 according to an embodiment of the disclosure may separate second audio 50 from first audio 20 based on the target information 10. For example, the audio separation network 100 may use the target information 10 to separate the second audio 50 from the first audio 20.

In an embodiment of the disclosure, the first audio 20 may include a plurality of audios. The plurality of audios may include the second audio 50.

In an embodiment of the disclosure, the second audio 50 may be a target audio to be separated from the first audio 20.

For example, the first audio 20 may include voices of a plurality of speakers, and the second audio 50 may be the voice of a target speaker from among the plurality of speakers. As another example, the first audio 20 may include voices of one or more speakers and ambient noise (e.g., a car horn), and the second audio 50 may be the voice of a target speaker from among the one or more speakers. As another example, the first audio 20 may include a vocal of a singer and the accompaniment of a song sung by the singer, and the second audio 50 may be the vocal of the singer.

In an embodiment of the disclosure, the target information 10 may be information related to the second audio 50 (i.e., the target audio). The audio separation network 100 may separate, as the second audio 50, an audio corresponding to the target information 10 from the first audio 20.

In an embodiment of the disclosure, the target information 10 may be of various types. For example, the target information 10 may include information of various modalities. For example, the target information 10 may be of a visual type (or visual modality), an auditory type (or auditory modality) or a text type (or text modality). However, the disclosure is not limited thereto, and as such, the target information 10 may include other types of information or other modalities. According to an embodiment, the target information 10 of the visual type (or the visual modality) may include, but is not limited to, an image 11 including a mouth of the target speaker. According to an embodiment, the target information 10 of the auditory type (or the auditory modality) may include, but is not limited to, a reference audio 12 in which a voice of the target speaker is recorded. According to an embodiment, the target information 10 of the text type (or the text modality) may include, but is not limited to, a speech text 13 of the target speaker. For example, the speech text may be a script or a subtitle. However, the types of target information 10 are not limited to the above examples, and the target information 10 may be information such as the gender or age of the target speaker.

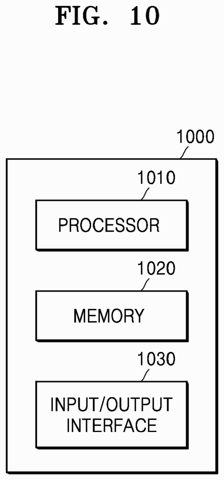

In an embodiment of the disclosure, the audio separation network 100 may include a plurality of feature extraction modules, a feature separation module 120, and an audio separation module 130. For example, the plurality of feature extraction modules may include a first feature extraction module 111, a second feature extraction module 112, and a third feature extraction module 113. However, the disclosure is not limited thereto, and as such, the number of features extraction modules may be different than three. The components 111, 112, 113, 120, and 130 included in the audio separation network 100 of FIG. 1 may be software components implemented by a processor. For example, the processor may be a processor 1010 of an electronic device 1000 of FIG. 10 (which will be described below), executing a program stored in a memory 1020. However, the disclosure is not limited thereto, and as such, the components 111, 112, 113, 120, and 130 may be virtual components for which actually-matching hardware devices do not exist. For example, a hardware device (e.g., an artificial intelligence (AI) processor) corresponding to at least one of the components 111, 112, 113, 120, and 130 of the audio separation network 100 may be included in the electronic device 1000. Thus, operations described as being performed by the components 111, 112, 113, 120, and 130 included in the audio separation network 100 of FIG. 1 may be regarded as being performed by the processor 1010 of the electronic device 1000 executing a program stored in the memory 1020.

In an embodiment of the disclosure, the plurality of feature extraction modules 111 to 113 may extract a plurality of pieces of first feature data from the target information 10. For example, the first feature extraction module 111 may extract a first piece of first feature data from the target information 10, the second feature extraction module 112 may extract a second piece of first feature data from the target information 10, and the third feature extraction module 113 may extract a third piece of first feature data from the target information 10. The plurality of feature extraction modules 111 to 113 may be artificial neural network models designed to extract first feature data from respective types of target information 10.

For example, the first feature extraction module 111 may be an artificial neural network model configured to extract the first piece of first feature data 31 from the image 11 including the mouth of the target speaker. In this case, the first feature extraction module 111 may be a model based on a three-dimensional (3D) convolutional neural network, and the first piece of first feature data 31 extracted from a visual type of target information 10 may be referred to as a visual embedding.

For example, the second feature extraction module 112 may be an artificial neural network model configured to extract the second piece of first feature data 32 from the reference audio 12 in which the voice of the target speaker is recorded. In this case, the second feature extraction module 112 may be a model based on a CNN and long short-term memory (LSTM), and the second piece of first feature data 32 extracted from an auditory type of target information 10 may be referred to as a voice embedding.

For example, the third feature extraction module 113 may be an artificial neural network model configured to extract the third piece of first feature data 33 from the speech text 13 of the target speaker. In this case, the third feature extraction module 113 may be a transformer-based model, and the third piece of first feature data 33 extracted from a text type of target information 10 may be referred to as a text embedding.

However, the types of the feature extraction modules 111 to 113 are not limited to the above examples, and the audio separation network 100 may include various feature extraction modules corresponding to various types of target information 10. Also, the artificial neural network model is not limited to the above examples, and as such, other types of machine learning or artificial neural network models may be provided.

In an embodiment of the disclosure, the feature separation module 120 may generate second feature data 40 based on a plurality of feature separation vectors 121 to 123 and the plurality of pieces of first feature data 31 to 33. For example, the feature separation module 120 may generate the second feature data 40 by applying a first feature separation vector 121 to the first piece of first feature data 31, applying a second feature separation vector 122 to the second piece of first feature data 32, and applying a third feature separation vector 123 to the third piece of first feature data 33. For example, the feature separation module 120 may include the plurality of feature separation vectors 121 to 123 corresponding to types of target information 10. In an embodiment of the disclosure, the feature separation vectors 121 to 123 may be vectors trained according to the types of target information 10. The feature separation vectors 121 to 123 may be referred to as modality-encoding vectors. FIG. 1 illustrates that the feature separation module 120 includes three feature separation vectors 121 to 123, but the disclosure is not limited thereto, and as such, the number of feature separation vectors may be different than three. For example, the feature separation module 120 may include the same number of feature separation vectors as the number of feature extraction modules.

In an embodiment of the disclosure, the feature separation module 120 may sum the feature separation vectors 121 to 123 with a corresponding one of the plurality of pieces of first feature data 31 to 33. For example, the feature separation module 120 may add the first feature separation vector 121 to the first feature data 31. The feature separation module 120 may add the second feature separation vector 122 to the first feature data 32. The feature separation module 120 may add the third feature separation vector 123 to the first feature data 33.

In an embodiment of the disclosure, the feature separation module 120 may generate the second feature data 40 by combining the sums of the plurality of pieces of first feature data 31 to 33 and the plurality of feature separation vectors 121 to 123.

According to an embodiment, while the plurality of pieces of first feature data 31 to 33 are extracted from one target information 10, the plurality of pieces of first feature data 31 to 33 are extracted by different feature extraction modules 111 to 113. For example, each of the different feature extraction modules 111 to 113 may extract a respective piece of first features data from the same target information 10. In an example case in which the plurality of pieces of first feature data 31 to 33 are input as is to the audio separation module 130, the audio separation module 130 may not be able identify the type of the target information 10. Moreover, even in an example case in which various types of target information 10 are input by using only one audio separation module 130, it may be necessary to provide the audio separation module 130 with information about the type of the target information 10, in order to separate the second audio 50 without performance degradation.

The feature separation module 120 according to an embodiment of the disclosure may provide the audio separation module 130 with information about the type of the target information 10 by separating the plurality of pieces of first feature data 31 to 33 in a feature space to generate the second feature data 40. For example, the feature separation module 120 may position the plurality of pieces of first feature data 31 to 33 in different areas in the feature space according to the types of the target information 10.

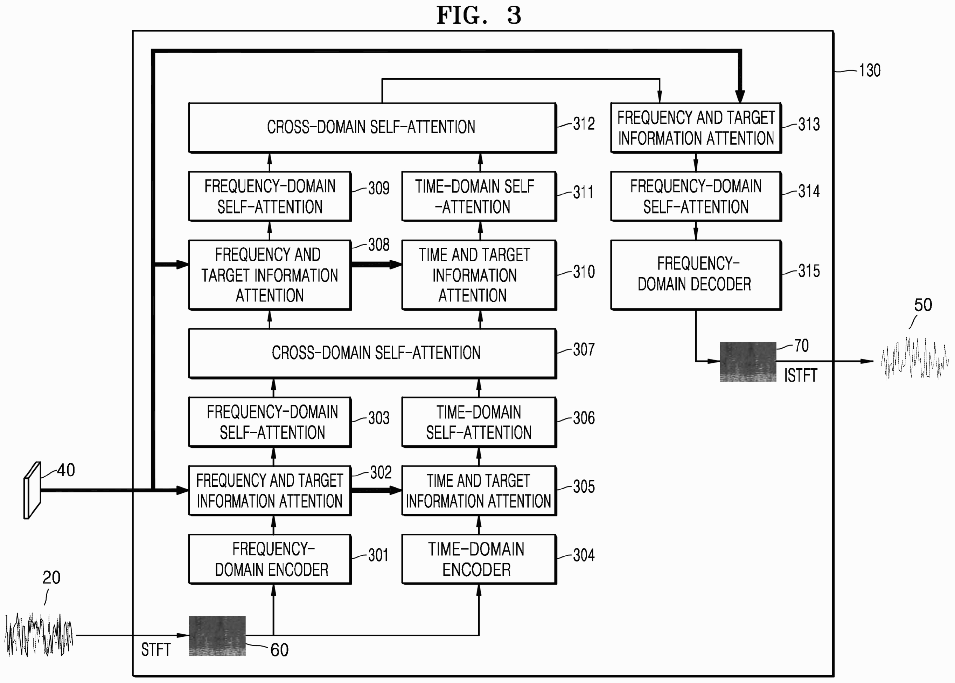

In an embodiment of the disclosure, the audio separation module 130 may separate the second audio 50 from the first audio 20 based on the second feature data 40. The audio separation module 130 may be an artificial neural network model configured to extract feature data from the first audio 20 and restore the second audio 50 based on an attention operation on the feature data. The components and operations of the audio separation module 130 will be described below with reference to FIG. 3.

In an embodiment of the disclosure, the audio separation network 100 may be trained by using a type of target information randomly selected from among a plurality of predetermined types of target information 10. For example, for learning three types of target information 10 (e.g., visual, auditory, and text types), the audio separation network 100 may be trained by inferring a target audio from a training audio by using a type of target information 10 randomly selected from among the three types of target information 10, calculating a loss function between the inferred target audio and the original target audio, and backpropagating the loss function.

The audio separation network 100 according to an embodiment of the disclosure may separate the second audio 50 with only one audio separation module 130 by using various types of target information 10, by extracting the plurality of pieces of first feature data 31 to 33 from the target information 10 by using the plurality of feature extraction modules 111 to 113, and generating the second feature data 40 corresponding to the types of the target information 10 by using the feature separation module 120.

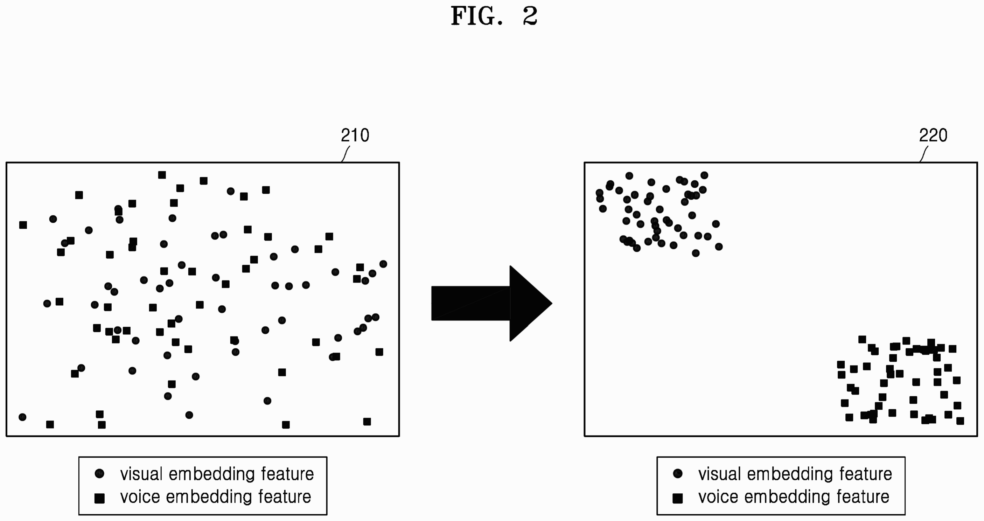

FIG. 2 shows a result of feature projection of a plurality of pieces of first feature data and second feature data, according to an embodiment of the disclosure.

FIG. 2 shows a comparison in a feature space between before and after the feature separation module 120 performs feature separation on two pieces of first feature data. In FIG. 2, the two pieces of first feature data may be referred to as a visual embedding and a voice embedding, respectively.

In FIG. 2, a graph 210 shows a result of feature projection of the visual embedding and the voice embedding. In the graph 210, the visual embedding and the voice embedding are randomly mixed in a feature space. Thus, in an example case in which the visual embedding and the voice embedding are input as is to the audio separation module 130, the audio separation module 130 may not be able identify the type of the target information 10.

In FIG. 2, a graph 220 shows a result of feature projection of a visual embedding and a voice embedding to which feature separation vectors are applied by the feature separation module 120. In the graph 220, the visual embedding and the voice embedding are separated from each other and then located in the feature space. For example, the feature separation vectors may act as biases for the visual embedding and the voice embedding to separate the visual embedding and the voice embedding in the feature space. Thus, the audio separation module 130 according to an embodiment of the disclosure may identify the type of the input target information 10. In addition, the audio separation network 100 may separate the second audio 50 with only one audio separation module 130 by using various types of target information 10.

FIG. 3 illustrates the audio separation module 130 according to an embodiment of the disclosure.

Referring to FIG. 3, in an embodiment of the disclosure, the audio separation module 130 may separate the second audio 50 from the first audio 20 based on the second feature data 40.

In an embodiment of the disclosure, the audio separation module 130 may include a frequency-domain encoder 301, a first frequency and target information attention module 302, a first frequency-domain self-attention module 303, a time-domain encoder 304, a first time and target information attention module 305, a first time-domain self-attention module 306, a first cross-domain self-attention module 307, a second frequency and target information attention module 308, a second frequency-domain self-attention module 309, a second time and target information attention module 310, a second time-domain self-attention module 311, a second cross-domain self-attention module 312, a third frequency and target information attention module 313, a third frequency-domain self-attention module 314, and a frequency-domain decoder 315. However, the components of the audio separation module 130 are not limited thereto. As such, according to an embodiment, one or more components may be added to the audio separation module 130 or omitted from the audio separation module 130.

In an embodiment of the disclosure, the audio separation module 130 may convert the first audio 20 into a spectrogram 60. For example, the audio separation module may apply a short-time Fourier transform (STFT) to the first audio 20 to generate the spectrogram 60. The spectrogram 60 is a visual representation of audio data, and represents differences in amplitude according to changes in time and frequency in the time-frequency domain, as differences in color or density between pixels.

In an embodiment of the disclosure, the frequency-domain encoder 301 may extract frequency-domain feature data of the first audio 20 from the spectrogram 60. For example, the frequency-domain encoder 301 may include one or more convolutional neural networks.

In an embodiment of the disclosure, the first frequency and target information attention module 302 may perform an operation on the frequency-domain feature data of the first audio 20, and the second feature data 40. For example, the first frequency and target information attention module 302 may perform the operation of based on Equation 1.

$$[\text{Equation } 1]$$

$$F \cdot V + F$$

Here, F denotes the frequency-domain feature data of the first audio 20, and V denotes the second feature data 40. Through the operation based on Equation 1, the first frequency and target information attention module 302 may specify which part of feature data of the first audio 20 the audio separation module 130 needs to focus.

In an embodiment of the disclosure, the first frequency-domain self-attention module 303 may perform a self-attention operation on output data of the first frequency and target information attention module 302. The self-attention operation may include an operation of obtaining query data, key data, and value data based on input data, calculating a weight value corresponding to a correlation between the query (Q) data and the key (K) data, and applying the weight value to the value (V) data. For example, the input data may be output data from the first frequency and target information attention module 302.

In an embodiment of the disclosure, time-domain encoder 304 may extract time-domain feature data of the first audio 20 from the spectrogram 60. For example, the time-domain encoder 304 may include one or more convolutional neural networks.

In an embodiment of the disclosure, the first time and target information attention module 305 may perform an operation based on the time-domain feature data of the first audio 20, and the second feature data 40. For example, the first time and target information attention module 305 may perform the operation of Equation 1 described above. In this case, F in Equation 1 denotes the time-domain feature data of the first audio 20. Through this operation based on Equation 1, the first time and target information attention module 305 may specify which part of the time-domain feature data of the first audio 20 the audio separation module 130 needs to focus.

In an embodiment of the disclosure, the first time-domain self-attention module 306 may perform a self-attention operation on output data of the first time and target information attention module 305.

In an embodiment of the disclosure, the first cross-domain self-attention module 307 may perform one or more cross-attention operations on output data of the first frequency-domain self-attention module 303, and output data of the first time-domain self-attention module 306. The cross-attention operation may include an operation of obtaining query data based on first input data, obtaining key data and value data based on second input data, calculating a weight value corresponding to a correlation between the query (Q) data and the key (K) data, and applying the weight value to the value (V) data.

In an embodiment of the disclosure, the first cross-domain self-attention module 307 may perform a first cross-attention operation of obtaining query (Q) data based on output data of the first time-domain self-attention module 306, obtaining key (K) data and value (V) data based on output data of the first frequency-domain self-attention module 303, calculating a weight value corresponding to a correlation between the query (Q) data and the key (K) data, and applying the weight value to the value (V) data.

In an embodiment of the disclosure, the first cross-domain self-attention module 307 may perform a second cross-attention operation of obtaining query (Q) data based on output data of the first frequency-domain self-attention module 303, obtaining key (K) data and value (V) data based on output data of the first time-domain self-attention module 306, calculating a weight value corresponding to a correlation between the query (Q) data and the key (K) data, and applying the weight value to the value (V) data.

In an embodiment of the disclosure, the second frequency and target information attention module 308 may perform a predetermined operation by using a result of the first cross-attention operation of the first cross-domain self-attention module 307, and the second feature data 40. For example, the second frequency and target information attention module 308 may perform the operation of Equation 1 described above. In this case, F in Equation 1 denotes the result of the first cross-attention operation of the first cross-domain self-attention module 307. Through this operation based on Equation 1, the second frequency and target information attention module 308 may specify which part of the result of the first cross-attention operation the audio separation module 130 needs to focus.

In an embodiment of the disclosure, the second frequency-domain self-attention module 309 may perform a self-attention operation on output data of the second frequency and target information attention module 308.

In an embodiment of the disclosure, the second time and target information attention module 310 may perform a predetermined operation by using the result of the second cross-attention operation of the first cross-domain self-attention module 307, and the second feature data 40. For example, the second time and target information attention module 310 may perform the operation of Equation 1 described above. In this case, F in Equation 1 denotes the result of the second cross-attention operation of the first cross-domain self-attention module 307. Through this operation based on Equation 1, the second time and target information attention module 310 may specify which part of the result of the second cross-attention operation the audio separation module 130 needs to focus.

In an embodiment of the disclosure, the second time-domain self-attention module 311 may perform a self-attention operation on output data of the second time and target information attention module 310.

In an embodiment of the disclosure, the second cross-domain self-attention module 312 may perform a cross-attention operation on output data of the second frequency-domain self-attention module 309, and output data of the second time-domain self-attention module 311.

In an embodiment of the disclosure, the second cross-domain self-attention module 312 may perform a cross-attention operation of obtaining query (Q) data based on output data of the second time-domain self-attention module 311, obtaining key (K) data and value (V) data based on output data of the second frequency-domain self-attention module 309, calculating a weight value corresponding to a correlation between the query (Q) data and the key (K) data, and applying the weight value to the value (V) data.

In an embodiment of the disclosure, the third frequency and target information attention module 313 may perform a predetermined operation by using a result of the cross-attention operation of the second cross-domain self-attention module 312, and the second feature data 40. For example, the third frequency and target information attention module 313 may perform the operation of Equation 1 described above. In this case, F in Equation 1 denotes the result of the cross-attention operation of the second cross-domain self-attention module 312. Through this operation based on Equation 1, the third frequency and target information attention module 313 may specify which part of the result of the cross-attention operation of the second cross-domain self-attention module 312 the audio separation module 130 needs to focus on.

In an embodiment of the disclosure, the third frequency-domain self-attention module 314 may perform a self-attention operation on output data of the third frequency and target information attention module 313.

In an embodiment of the disclosure, the frequency-domain decoder 315 may obtain a spectrogram 70 of the second audio 50 from output data of the third frequency-domain self-attention module 314. For example, the frequency-domain decoder 315 may include one or more transposed convolutional neural networks.

In an embodiment of the disclosure, the audio separation module 130 may convert the spectrogram 70 into the second audio 50 by applying an inverse short-time Fourier transform (ISTF) to the spectrogram 70.

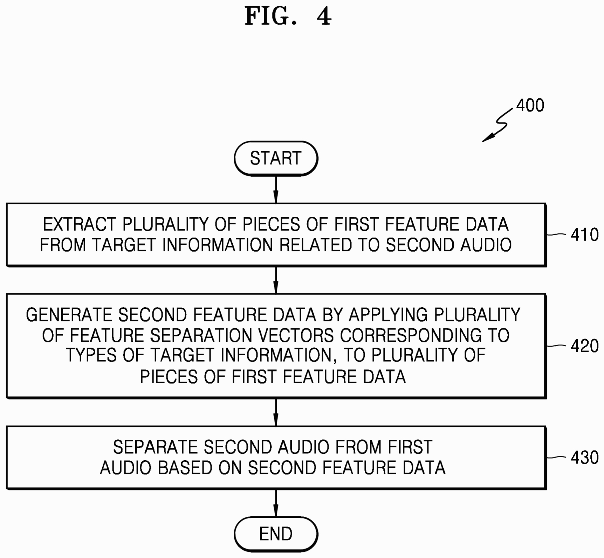

FIG. 4 is a flowchart of an audio separation method according to an embodiment of the disclosure.

In an embodiment of the disclosure, an audio separation method 400 may be performed by the audio separation network 100 or the electronic device 1000 (see FIG. 10) for executing the audio separation network 100.

Referring to FIG. 4, in operation 410, the method may include extracting a plurality of pieces of first feature data from target information related to a second audio. For, example, the audio separation network 100 may extract the plurality of pieces of first feature data from the target information related to the second audio. In an embodiment of the disclosure, the second audio may be a target audio to be separated, and the target information may be of various types, such as an image including the mouth of a target speaker, a reference audio in which a voice of the target speaker is recorded, or a speech text of the target speaker. Operation 410 may correspond to an operation of the plurality of feature extraction modules 111 to 113.

In operation 420, the method may include generating second feature data based on the plurality of pieces of first feature data and a plurality of feature separation vectors corresponding to a plurality of types of the target information. For, example, the audio separation network 100 may generate second feature data by applying the plurality of feature separation vectors corresponding to the plurality of types of target information, to the plurality of pieces of first feature data. In an embodiment of the disclosure, the feature separation vectors may be vectors trained according to types of target information. The feature separation vectors may act as biases for the plurality of pieces of first feature data to separate the plurality of pieces of first feature data in a feature space, respectively. Operation 420 may correspond to an operation of the feature separation module 120.

In operation 430, the method may include separating the second audio from the first audio based on the second feature data. For, example, the audio separation network 100 may separate the second audio from the first audio based on the second feature data. The audio separation network 100 may extract feature data from the first audio and restore the second audio based on an attention operation on the feature data. Operation 430 may correspond to an operation of the audio separation module 130.

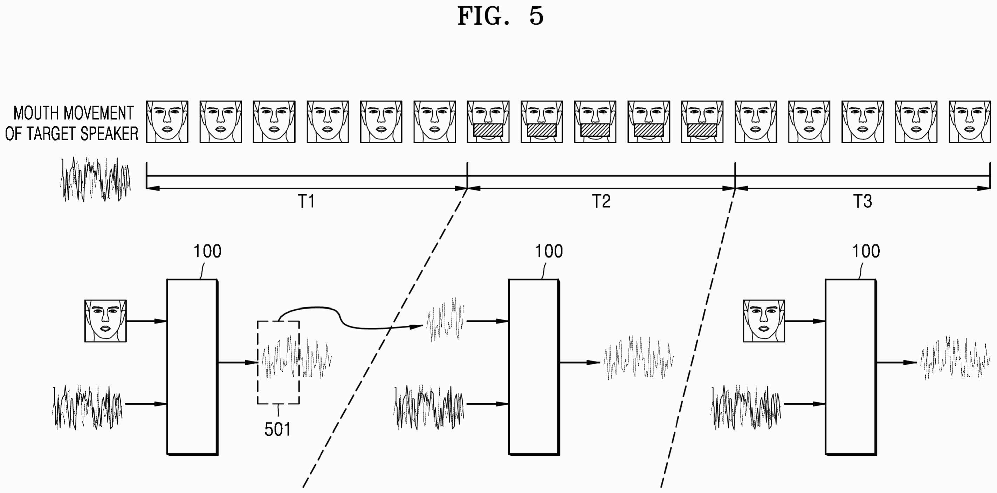

FIG. 5 is a conceptual diagram illustrating an operation performed by the audio separation network 100 in an example case in which target information is not available, according to an embodiment of the disclosure.

The audio separation network 100 according to an embodiment of the disclosure may utilize various types of target information 10, and thus, in an example case in which the target information 10 is no longer available while separating a target audio based on one piece of target information 10, may separate the target audio based on other target information.

FIG. 5 illustrates a case where the mouth of a target speaker is obscured while the audio separation network 100 is separating a target audio by using a mouth movement of the target speaker.

Referring to FIG. 5, in section T1, the audio separation network 100 may separate the target audio based on a mouth movement of the target speaker.

However, in an example case in which the mouth of the target speaker is obscured in section T2, the audio separation network 100 may separate the target audio based on a previously separated part 501 of the target audio in section T1. For example, the audio separation network 100 may use, as target information, a previously separated part 501 of the target audio in section T1 instead of the mouth movement of the target speaker. In this case, the previously separated part 501 of the target audio may function as a reference audio in which a voice of the target speaker is recorded as described above.

In an example case in which the mouth of the target speaker appears again in section T3, the audio separation network 100 may separate the target audio based on the mouth movement of the target speaker again.

As such, even in an example case in which the target information is no longer available while separating a target audio by using any type of target information, the audio separation network 100 according to an embodiment of the disclosure may separate the target audio without a decline in audio separation performance by using another type of target information. However, the disclosure is not limited thereto, and as such, according to an embodiment, the audio separation network 100 may separate the target audio based on a previously separated part 501 of the target audio in section T1 even when the mouth of the target speaker is not obscured in section T2. For example, in section T2, the audio separation network 100 may separate the target audio based on a previously separated part 501 of the target audio in section T1, the mouth movement of the target speaker, or a combination based on both previously separated part 501 of the target audio in section T1 and the mouth movement of the target.

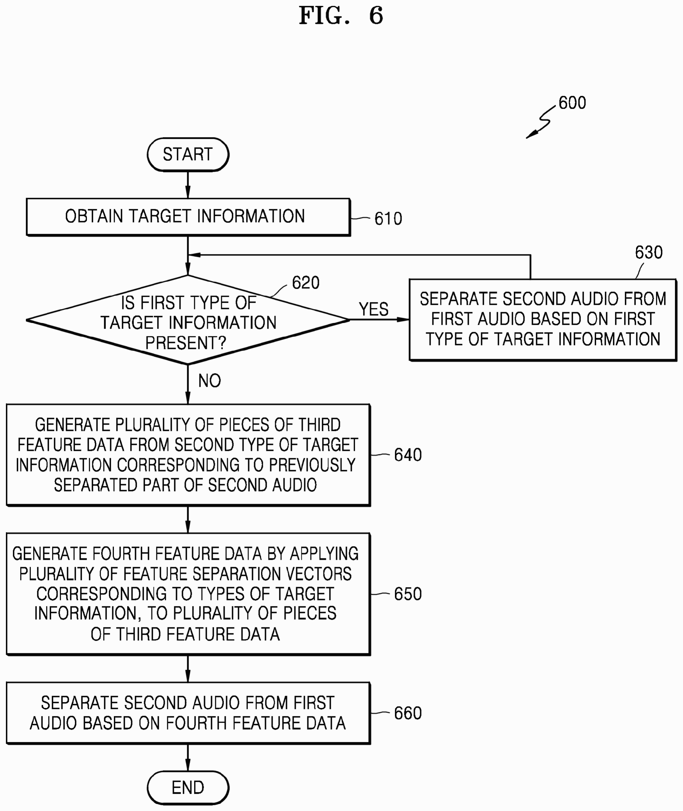

FIG. 6 is a flowchart of a method of separating an audio in an example case in which target information is no longer available, according to an embodiment of the disclosure.

According to an embodiment, an audio separation method 600 may be performed by the audio separation network 100 or the electronic device 1000 (see FIG. 10) for executing the audio separation network 100.

Referring to FIG. 6, in operation 610, the method may include obtaining target information. For example, the audio separation network 100 may obtain target information. In an embodiment of the disclosure, the target information may be of various types, such as an image including the mouth of a target speaker, a reference audio in which a voice of the target speaker is recorded, or a speech text of the target speaker.

In operation 620, the method may include determining whether a first type of target information is present. For example, the audio separation network 100 may determine whether a first type of target information is present. In an embodiment of the disclosure, the audio separation network 100 may further include a module for determining the presence or absence of the first type of target information. In an example case in which the first type of target information is an image including the mouth of a target speaker, the audio separation network 100 may include an artificial neural network model configured to detect the mouth of a target speaker.

In operation 630, the method may include separating a second audio from a first audio based on the first type of target information. For example, in a case in which the first type of target information is present, the audio separation network 100 may separate a second audio from a first audio based on the first type of target information. In an embodiment of the disclosure, operation 630 may include operations 410, 420, and 430 of FIG. 4.

In operation 640, the method may include generating a plurality of pieces of third feature data from a second type of target information corresponding to a previously separated part of the second audio. For example, in a case in which the first type of target information is not present, the audio separation network 100 may generate the plurality of pieces of third feature data from the second type of target information corresponding to the previously separated part of the second audio. Operation 640 may correspond to operations of the plurality of feature extraction modules 111 to 113.

In operation 650, the method may include generating fourth feature data based on a plurality of feature separation vectors corresponding to types of target information and the plurality of pieces of third feature data. For example, the audio separation network 100 may generate fourth feature data by applying the plurality of feature separation vectors corresponding to types of target information, to the plurality of pieces of third feature data. In an embodiment of the disclosure, the feature separation vectors may be vectors trained according to types of target information. The feature separation vectors may act as biases for the plurality of pieces of third feature data to separate the plurality of pieces of third feature data in a feature space, respectively. Operation 650 may correspond to an operation of the feature separation module 120.

In operation 660, the method may include separating the second audio from the first audio based on the fourth feature data. For example, the audio separation network 100 may separate the second audio from the first audio based on the fourth feature data. The audio separation network 100 may extract feature data from the first audio and restore the second audio based on an attention operation on the feature data. Operation 660 may correspond to an operation of the audio separation module 130.

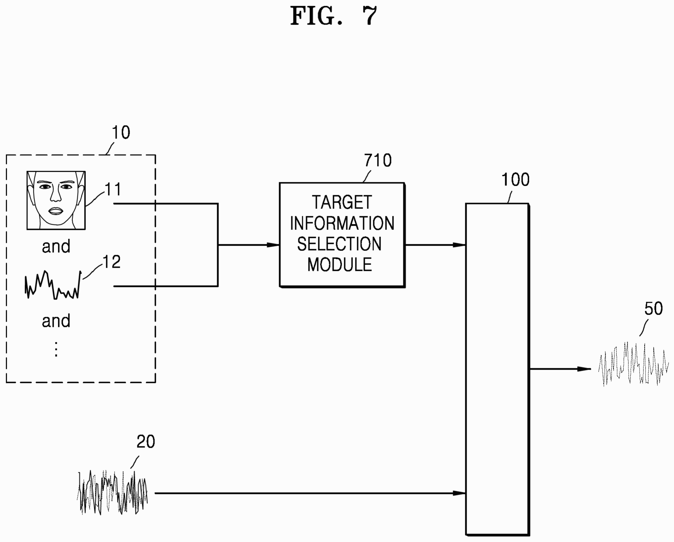

FIG. 7 is a conceptual diagram illustrating the audio separation network 100 selecting one of a plurality of pieces of target information, according to an embodiment of the disclosure.

Referring to FIG. 7, in an example case in which a plurality of pieces of target information 10 is input, the audio separation network 100 may separate the second audio 50 from the first audio 20 based on target information selected by a target information selection module 710.

In an embodiment of the disclosure, the target information selection module 710 may select one of the plurality of pieces of target information 10. Here, the criteria for selection of target information may be implemented in various manners.

In an embodiment of the disclosure, the target information selection module 710 may determine the reliability of each of the plurality of pieces of target information 10, and select the target information with the highest reliability. The criteria for determining reliability may vary depending on the type of target information 10.

For example, the target information selection module 710 may determine the reliability of the image 11 including the mouth of the target speaker, based on the proportion of time sections in which the mouth of the target speaker appears, in the entire time section. In an example case in which the length of the entire time section is 10 seconds and the mouth of the target speaker appears for 6 seconds, the target information selection module 710 may determine the reliability of the image 11 including the mouth of the target speaker to be 60 %.

As another example, the target information selection module 710 may determine the reliability of the reference audio 12 in which the voice of the target speaker is recorded, based on a degree to which a background sound is contained in the reference audio 12 in which the voice of the target speaker is recorded. In this case, the target information selection module 710 may include an artificial neural network model configured to extract a background sound.

In an embodiment of the disclosure, the target information selection module 710 may receive a user input for selecting target information, and select one of the plurality of pieces of target information 10 according to the received user input. For example, the target information selection module 710 may receive a user input for selecting target information, through an input/output interface 1030 (see FIG. 10).

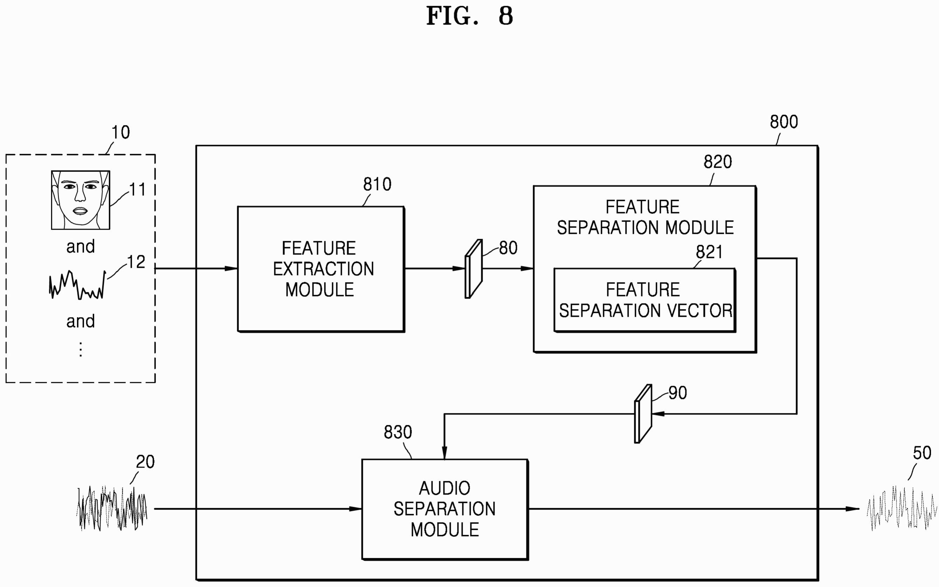

FIG. 8 illustrates an audio separation network 800 configured to separate a target audio by using a plurality of pieces of target information, according to an embodiment of the disclosure.

Referring to FIG. 8, the audio separation network 800 according to an embodiment of the disclosure may separate the second audio 50 from the first audio 20 by using a plurality of pieces of target information 10. The types of the plurality of pieces of target information 10 may be different from each other. For example, as illustrated in FIG. 8, the audio separation network 800 may separate the second audio 50 by using both the image 11 including the mouth of the target speaker and the reference audio 12 in which the voice of the target speaker is recorded.

FIG. 8 illustrates, as examples of the plurality of pieces of target information 10, the image 11 including the mouth of the target speaker and the reference audio 12 in which the voice of the target speaker is recorded, but the plurality of pieces of target information 10 may further include various types of target information as described above.

In an embodiment of the disclosure, the audio separation network 800 may include a feature extraction module 810, a feature separation module 820, and an audio separation module 830.

In an embodiment of the disclosure, the feature extraction module 810 may extract first feature data 80 from the plurality of pieces of target information 10. The first feature data 80 may include combined feature data of the plurality of pieces of target information 10. The feature extraction module 810 may be an artificial neural network model designed to extract first feature data 80 from a plurality of pieces of target information 10. For example, the feature extraction module 810 may include one or more CNNs.

In an embodiment of the disclosure, the feature separation module 820 may generate second feature data 90 by applying a feature separation vector 821 to the first feature data 80. The feature separation module 820 may include the feature separation vector 821 corresponding to the number of pieces of target information 10. In an embodiment of the disclosure, the feature separation vector 821 may be a vector trained according to the number of pieces of target information 10. In an embodiment of the disclosure, the feature separation module 820 may add the feature separation vector 821 to the first feature data 80.

According to an embodiment, because the first feature data 80 corresponds to combined features of the plurality of pieces of target information 10, in an example case in which the first feature data 80 is input as is to the audio separation module 830, the audio separation module 830 cannot identify the number of pieces of target information 10. In order to separate the second audio 50 based on an arbitrary number of pieces of target information 10 by using only one audio separation module 830, it is necessary to provide the audio separation module 830 with information about the number of pieces of target information 10.

The feature separation module 820 according to an embodiment of the disclosure may provide the audio separation module 830 with information about the number of pieces of target information 10 by generating the second feature data 90 including the information about the number of pieces of target information 10 by using the feature separation vector 821.

In an embodiment of the disclosure, the audio separation module 830 may separate the second audio 50 from the first audio 20 based on the second feature data 90. The audio separation module 830 may be an artificial neural network model configured to extract feature data from the first audio 20 and restore the second audio 50 based on an attention operation on the feature data. For example, the audio separation module 830 may correspond to the audio separation module 130 of FIGS. 1 and 3.

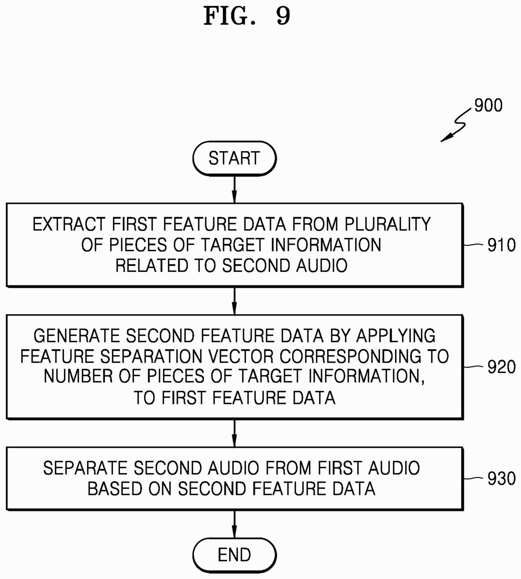

FIG. 9 is a flowchart of an audio separation method 900 according to an embodiment of the disclosure.

In an embodiment of the disclosure, the audio separation method 900 may be performed by the audio separation network 800 or the electronic device 1000 (see FIG. 10) for executing the audio separation network 800.

Referring to FIG. 9, in operation 910, the method may include extracting first feature data from a plurality of pieces of target information related to a second audio. For example, the audio separation network 800 may extract first feature data from a plurality of pieces of target information related to a second audio. In an embodiment of the disclosure, the second audio may be a target audio to be separated, and the target information may be of various types, such as an image including the mouth of a target speaker, a reference audio in which a voice of the target speaker is recorded, or a speech text of the target speaker. Operation 910 may correspond to an operation of the feature extraction module 810.

In operation 920, the method may include generating second feature data based on a feature separation vector corresponding to the number of pieces of target information and the first feature data. For example, the audio separation network 800 may generate second feature data by applying the feature separation vector corresponding to the number of pieces of target information, to the first feature data. In an embodiment of the disclosure, the feature separation vector may be a vector trained according to the number of pieces of target information. Operation 920 may correspond to an operation of the feature separation module 820.

In operation 930, the method may include separating the second audio from a first audio based on the second feature data. For example, the audio separation network 800 may separate the second audio from a first audio based on the second feature data. The audio separation network 800 may extract feature data from the first audio and restore the second audio based on an attention operation on the feature data. Operation 930 may correspond to an operation of the audio separation module 830.

FIG. 10 illustrates the electronic device 1000 for executing the audio separation network 100 or 800, according to an embodiment of the disclosure.

The electronic device 1000 according to an embodiment of the disclosure may execute the audio separation network 100 (as shown FIG. 1) or 800 (as shown FIG. 8) to separate the second audio 50 from the first audio 20 by using the target information 10.

Referring to FIG. 10, the electronic device 1000 according to an embodiment of the disclosure may include the processor 1010, the memory 1020, and the input/output interface 1030. However, the components of the electronic device 1000 are not limited to those illustrated in FIG. 10, and the electronic device 1000 may include more components or fewer components than the components illustrated in FIG. 10.

In an embodiment of the disclosure, the processor 1010 may perform one or more operations of the electronic device 1000. For example, the processor 1010 may be a component configured to control a series of processes such that the electronic device 1000 operates according to embodiments of the disclosure. According to an embodiment, the processor 1010 may include one or more processors. The one or more processors may be a circuitry such as a system-on-chip (SoC) or an integrated circuit (IC). The one or more processors included in the processor 1010 may be general-purpose processors such as CPUs, microprocessor units (MPUs), APs, or DSPs, dedicated graphics processors such as GPUs or VPUs, dedicated artificial intelligence processors such as NPUs, or dedicated communication processors such as communication processors (CPs). In a case where the one or more processors included in the processor 1010 are dedicated artificial intelligence processors, the dedicated artificial intelligence processors may be designed with a hardware structure specialized for processing a particular artificial intelligence model.

In an embodiment of the disclosure, the processor 1010 may write data in the memory 1020 or read data stored in the memory 1020, and in particular, may execute a program or at least one instruction stored in the memory 1020 to process data according to predefined operation rules or an artificial intelligence model. Thus, the processor 1010 may perform the operations described herein, and the operations described herein to be performed by the electronic device 1000 may be performed by the processor 1010 unless otherwise specified.

In an embodiment of the disclosure, the memory 1020 is a component for storing various programs or data, and may include a storage medium such as read-only memory (ROM), random-access memory (RAM), a hard disk, a CD-ROM, or a digital video disc (DVD), or a combination of storage media. The memory 1020 may not be a separate component and may be included in the processor 1010. The memory 1020 may include a volatile memory, a nonvolatile memory, or a combination of a volatile memory and a nonvolatile memory. The memory 1020 may store a program or at least one instruction for performing the operations according to the embodiments described herein. The memory 1020 may provide data stored therein to the processor 1010 in response to a request from the processor 1010.

In an embodiment of the disclosure, the input/output interface 1030 may include an input interface (e.g., a touch screen, a hard button, or a microphone) for receiving a control command or information from a user, and an output interface (e.g., a display panel or a speaker) for indicating a result of executing an operation according to control by the user, or a state of the electronic device 1000. In an embodiment of the disclosure, the input/output interface 1030 may reproduce the second audio 50 separated from the first audio 20, and receive a user input for selecting target information from the user. According to an embodiment of the disclosure, a method of processing a first audio using one or more artificial neural networks may include extracting a plurality of pieces of first feature data from target information related to a second audio, generating second feature data based on the plurality of pieces of first feature data and a plurality of feature separation vectors corresponding to a plurality of types of the target information, and separating the second audio from the first audio based on the second feature data.

In an embodiment, the plurality of types of the target information may include at least one of a visual type, an auditory type, or a text type.

In an embodiment, the generating of the second feature data may include: separating each of the plurality of pieces of first feature data in a feature space by applying the plurality of feature separation vectors to the plurality of pieces of first feature data.

In an embodiment, the plurality of feature separation vectors are vectors trained respectively according to a corresponding one of the plurality of types of the target information.

In an embodiment, the generating of the second feature data may include: adding, to each of the plurality of pieces of first feature data, a corresponding feature separation vector from among the plurality of feature separation vectors.

In an embodiment, the separating of the second audio from the first audio based on the second feature data may include converting the first audio into a spectrogram by applying a short-time Fourier transform to the first audio, extracting first domain feature data of the first audio from the spectrogram, performing a first operation based on the first domain feature data of the first audio, and the second feature data, performing a first self-attention operation on a result of the first operation, extracting second domain feature data of the first audio from the spectrogram, performing a second operation based on the second domain feature data of the first audio, and the second feature data, performing a second self-attention operation on a result of the second operation and performing one or more cross-attention operations on the result of the first self-attention operation and the result of the second self-attention operation.

In an embodiment, the method may include determining whether a first type of the target information is present, based on determining that the first type of the target information is not present, generating a plurality of pieces of third feature data from a second type of the target information corresponding to a previously separated part of the second audio, generating fourth feature data based on the plurality of feature separation vectors and the plurality of pieces of third feature data and separating the second audio from the first audio based on the fourth feature data.

In an embodiment, the target information may include a plurality of pieces of target information, and the extracting of the plurality of pieces of first feature data from the target information related to the second audio may include: determining reliability of each of the plurality of pieces of target information; selecting the target information with a highest reliability from among the plurality of pieces of target information; and extracting the plurality of pieces of first feature data from the target information with the highest reliability.

In an embodiment, the target information may include a plurality of pieces of target information, and the extracting of the plurality of pieces of first feature data from the target information related to the second audio may further include: receiving a user input for selecting the target information; and extracting the plurality of pieces of first feature data from the target information corresponding to the user input from among the plurality of pieces of target information.

In an embodiment, the one or more artificial neural networks are trained by using a type of target information randomly selected from among the plurality of types of target information.

According to an embodiment, an electronic device for processing a first audio using one or more artificial neural networks may include: one or more processors; and a memory storing one or more instructions that, when executed by the one or more processors individually or collectively, cause the electronic device using one or more artificial neural networks to perform operations including: extracting a plurality of pieces of first feature data from target information related to a second audio; generating second feature data based on the plurality of pieces of first feature data and a plurality of feature separation vectors corresponding to a plurality of types of the target information; and separating the second audio from the first audio based on the second feature data.

In an embodiment, the plurality of types of the target information may include at least one of a visual type, an auditory type, or a text type.

In an embodiment, the generating of the second feature data may include: separating each of the plurality of pieces of first feature data in a feature space by applying the plurality of feature separation vectors to the plurality of pieces of first feature data.

In an embodiment, the plurality of feature separation vectors are vectors trained respectively according to a corresponding one of the plurality of types of the target information.

In an embodiment, the generating of the second feature data may include: adding, to each of the plurality of pieces of first feature data, a corresponding feature separation vector from among the plurality of feature separation vectors.

In an embodiment, the separating of the second audio from the first audio based on the second feature data may include: converting the first audio into a spectrogram by applying a short-time Fourier transform to the first audio; extracting first domain feature data of the first audio from the spectrogram; performing a first operation based on the first domain feature data of the first audio, and the second feature data; performing a first self-attention operation on a result of the first operation; extracting second domain feature data of the first audio from the spectrogram; performing a second operation based on the second domain feature data of the first audio, and the second feature data; performing a second self-attention operation on a result of the second operation; and performing one or more cross-attention operations on the result of the first self-attention operation and the result of the second self-attention operation.

In an embodiment, the operations may further include: determining whether a first type of the target information is present; based on determining that the first type of the target information is not present, generating a plurality of pieces of third feature data from a second type of the target information corresponding to a previously separated part of the second audio; generating fourth feature data based on the plurality of feature separation vectors and the plurality of pieces of third feature data; and separating the second audio from the first audio based on the fourth feature data.

In an embodiment, the target information may include a plurality of pieces of target information, and the extracting of the plurality of pieces of first feature data from the target information related to the second audio may include: determining reliability of each of the plurality of pieces of target information; selecting the target information a highest reliability from among the plurality of pieces of target information; and extracting the plurality of pieces of first feature data from the target information with the highest reliability.

In an embodiment, the target information may include a plurality of pieces of target information, and the extracting of the plurality of pieces of first feature data from the target information related to the second audio may further include: receiving a user input for selecting the target information; and extracting the plurality of pieces of first feature data from the target information corresponding to the user input from among the plurality of pieces of target information.

According to an embodiment, a computer-readable recording medium may have stored therein a program that, when executed by a computer, causes the computer to perform a method including: extracting a plurality of pieces of first feature data from target information related to a second audio; generating second feature data based on the plurality of pieces of first feature data and a plurality of feature separation vectors corresponding to a plurality of types of the target information; and separating the second audio from the first audio based on the second feature data.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the spirit and scope as defined by the following claims.

**Claims**

1. A method of processing a first audio using one or more artificial neural networks, the method comprising:

   extracting a plurality of pieces of first feature data from target information related to a second audio;
   generating second feature data based on the plurality of pieces of first feature data and a plurality of feature separation vectors corresponding to a plurality of types of the target information; and
separating the second audio from the first audio based on the second feature data.

2. The method of claim 1, wherein the plurality of types of the target information comprise at least one of a visual type, an auditory type, or a text type.

3. The method of claim 1 or 2, wherein the generating of the second feature data comprises:
separating each of the plurality of pieces of first feature data in a feature space by applying the plurality of feature separation vectors to the plurality of pieces of first feature data.

4. The method of any one of claims 1 to 3, wherein the plurality of feature separation vectors are vectors trained respectively according to a corresponding one of the plurality of types of the target information.

5. The method of any one of claims 1 to 4, wherein the generating of the second feature data comprises:
adding, to each of the plurality of pieces of first feature data, a corresponding feature separation vector from among the plurality of feature separation vectors.

6. The method of any one of claims 1 to 5, wherein the separating of the second audio from the first audio based on the second feature data comprises:

   converting the first audio into a spectrogram by applying a short-time Fourier transform to the first audio;
   extracting first domain feature data of the first audio from the spectrogram;
   performing a first operation based on the first domain feature data of the first audio, and the second feature data;
   performing a first self-attention operation on a result of the first operation;
   extracting second domain feature data of the first audio from the spectrogram;
   performing a second operation based on the second domain feature data of the first audio, and the second feature data;
   performing a second self-attention operation on a result of the second operation; and
   performing one or more cross-attention operations on the result of the first self-attention operation and the result of the second self-attention operation.

7. The method of any one of claims 1 to 6, further comprising:

determining whether a first type of the target information is present;

based on determining that the first type of the target information is not present, generating a plurality of pieces of third feature data from a second type of the target information corresponding to a previously separated part of the second audio;

generating fourth feature data based on the plurality of feature separation vectors and the plurality of pieces of third feature data; and

separating the second audio from the first audio based on the fourth feature data.

8. The method of any one of claims 1 to 7, wherein the target information comprises a plurality of pieces of target information, and

the extracting of the plurality of pieces of first feature data from the target information related to the second audio comprises:

determining reliability of each of the plurality of pieces of target information;

selecting the target information with a highest reliability from among the plurality of pieces of target information; and

extracting the plurality of pieces of first feature data from the target information with the highest reliability.

9. The method of any one of claims 1 to 8, wherein the target information comprises a plurality of pieces of target information, and

the extracting of the plurality of pieces of first feature data from the target information related to the second audio further comprises:

receiving a user input for selecting the target information; and

extracting the plurality of pieces of first feature data from the target information corresponding to the user input from among the plurality of pieces of target information.

10. The method of any one of claims 1 to 9, wherein the one or more artificial neural networks are trained by using a type of target information randomly selected from among the plurality of types of target information.

11. An electronic device for processing a first audio using one or more artificial neural networks comprising:

one or more processors comprising processing circuitry; and

memory storing one or more instructions that, when executed by the one or more processors individually or collectively, cause the electronic device using the one or more artificial neural networks to perform operations comprising:

extracting a plurality of pieces of first feature data from target information related to a second audio;

generating second feature data based on the plurality of pieces of first feature data and a plurality of feature separation vectors corresponding to a plurality of types of the target information; and

separating the second audio from the first audio based on the second feature data.

12. The electronic device of claim 11, wherein the plurality of types of the target information comprise at least one of a visual type, an auditory type, or a text type.

13. The electronic device of claim 11 or 12, wherein the plurality of feature separation vectors are vectors trained respectively according to a corresponding one of the plurality of types of the target information.

14. The electronic device of any one of claims 11 to 13, wherein the operations further comprise:

determining whether a first type of the target information is present;

based on determining that the first type of the target information is not present, generating a plurality of pieces of third feature data from a second type of the target information corresponding to a previously separated part of the second audio;

generating fourth feature data based on the plurality of feature separation vectors and the plurality of pieces of third feature data; and

separating the second audio from the first audio based on the fourth feature data.

15. A computer-readable recording medium having stored therein a program that, when executed by a computer, causes the computer to perform the method of any one of claims 1 to 10.

## FIG. 1

EP 4 765 114 A1

FIG. 2

FIG. 3

EP 4 765 114 A1

# FIG. 4

400

START

EXTRACT PLURALITY OF PIECES OF FIRST FEATURE DATA FROM TARGET INFORMATION RELATED TO SECOND AUDIO — 410

GENERATE SECOND FEATURE DATA BY APPLYING PLURALITY OF FEATURE SEPARATION VECTORS CORRESPONDING TO TYPES OF TARGET INFORMATION, TO PLURALITY OF PIECES OF FIRST FEATURE DATA — 420

SEPARATE SECOND AUDIO FROM FIRST AUDIO BASED ON SECOND FEATURE DATA — 430

END

# FIG. 5

MOUTH MOVEMENT OF TARGET SPEAKER

T1          T2          T3

100         100         100

501

# FIG. 6

600

START

OBTAIN TARGET INFORMATION — 610

IS FIRST TYPE OF
TARGET INFORMATION
PRESENT? — 620

YES → SEPARATE SECOND AUDIO FROM
FIRST AUDIO BASED ON FIRST
TYPE OF TARGET INFORMATION — 630

NO

GENERATE PLURALITY OF PIECES OF THIRD
FEATURE DATA FROM SECOND TYPE OF TARGET
INFORMATION CORRESPONDING TO PREVIOUSLY
SEPARATED PART OF SECOND AUDIO — 640

GENERATE FOURTH FEATURE DATA BY APPLYING
PLURALITY OF FEATURE SEPARATION VECTORS
CORRESPONDING TO TYPES OF TARGET
INFORMATION, TO PLURALITY OF PIECES
OF THIRD FEATURE DATA — 650

SEPARATE SECOND AUDIO FROM FIRST
AUDIO BASED ON FOURTH FEATURE DATA — 660

END

# FIG. 7

FIG. 8

EP 4 765 114 A1

# FIG. 9

900

START

EXTRACT FIRST FEATURE DATA FROM PLURALITY OF PIECES OF TARGET INFORMATION RELATED TO SECOND AUDIO — 910

GENERATE SECOND FEATURE DATA BY APPLYING FEATURE SEPARATION VECTOR CORRESPONDING TO NUMBER OF PIECES OF TARGET INFORMATION, TO FIRST FEATURE DATA — 920

SEPARATE SECOND AUDIO FROM FIRST AUDIO BASED ON SECOND FEATURE DATA — 930

END

# FIG. 10

## INTERNATIONAL SEARCH REPORT

| International application No. |
|---|
| **PCT/KR2024/096005** |

| A. | CLASSIFICATION OF SUBJECT MATTER |
|---|---|

**G10L 21/0272**(2013.01)i; **G10L 25/30**(2013.01)i; **G10L 25/18**(2013.01)i; **G10L 25/51**(2013.01)i; **G06N 3/04**(2006.01)i; **G10L 17/02**(2013.01)i; **G10L 15/25**(2013.01)i; **G06N 20/00**(2019.01)i

According to International Patent Classification (IPC) or to both national classification and IPC

| B. | FIELDS SEARCHED |
|---|---|

Minimum documentation searched (classification system followed by classification symbols)

G10L 21/0272(2013.01); G10L 15/06(2006.01); G10L 15/25(2013.01); G10L 15/30(2013.01); G10L 17/04(2013.01); G10L 21/0208(2013.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 오디오 분리(audio separation), 멀티 모달(multi-modal), 타겟 정보(target informati on), 특징(feature), 신경망(neural network)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | GU, Rongzhi et al. Multi-modal Multi-channel Target Speech Separation. arXiv:2003.07032v2. October 2020. [Retrieved on 12 November 2024]. Retrieved from <https://arxiv.org/pdf/2003.07032v2>.<br>See pages 2-3, 5-7 and 10; and figures 1-2. | 1-15 |
| A | XIONG, Junwen et al. AUDIO-VISUAL SPEECH SEPARATION BASED ON JOINT FEATURE REPRESENTATION WITH CROSS-MODAL ATTENTION. arXiv:2203.02655v1. March 2022. [Retrieved on 12 November 2024]. Retrieved from <https://arxiv.org/pdf/2203.02655v1>.<br>See section 2; and figure 2. | 1-15 |
| A | CN 115620723 A (IFLYTEK CO., LTD.) 17 January 2023 (2023-01-17)<br>See claim 1. | 1-15 |
| A | KR 10-2535338 B1 (GOOGLE LLC) 26 May 2023 (2023-05-26)<br>See paragraphs [0043]-[0045]; and figure 1. | 1-15 |
| A | CN 112863538 A (FUDAN UNIVERSITY) 28 May 2021 (2021-05-28)<br>See paragraph [0016]; and claim 1. | 1-15 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **28 November 2024** | **28 November 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/096005**

| Patent document cited in search report | | | Publication date (day/month/year) | Patent family member(s) | | | Publication date (day/month/year) |
|---|---|---|---|---|---|---|---|
| CN | 115620723 | A | 17 January 2023 | None | | | |
| KR | 10-2535338 | B1 | 26 May 2023 | CN | 112262431 | A | 22 January 2021 |
| | | | | CN | 112262431 | B | 02 August 2024 |
| | | | | EP | 3655947 | A1 | 27 May 2020 |
| | | | | EP | 3655947 | B1 | 09 March 2022 |
| | | | | EP | 4009321 | A1 | 08 June 2022 |
| | | | | EP | 4009321 | B1 | 01 May 2024 |
| | | | | EP | 4383249 | A2 | 12 June 2024 |
| | | | | EP | 4383249 | A3 | 10 July 2024 |
| | | | | JP | 2021-533397 | A | 02 December 2021 |
| | | | | JP | 2023-029973 | A | 07 March 2023 |
| | | | | JP | 7191987 | B2 | 19 December 2022 |
| | | | | JP | 7508533 | B2 | 01 July 2024 |
| | | | | KR | 10-2021-0008520 | A | 22 January 2021 |
| | | | | KR | 10-2492783 | B1 | 27 January 2023 |
| | | | | US | 10978059 | B2 | 13 April 2021 |
| | | | | US | 11735176 | B2 | 22 August 2023 |
| | | | | US | 2020-0342857 | A1 | 29 October 2020 |
| | | | | US | 2021-0217411 | A1 | 15 July 2021 |
| | | | | US | 2023-0395069 | A1 | 07 December 2023 |
| | | | | WO | 2020-068056 | A1 | 02 April 2020 |
| CN | 112863538 | A | 28 May 2021 | CN | 112863538 | B | 14 June 2022 |

Form PCT/ISA/210 (patent family annex) (July 2022)